# EUROPEAN PATENT APPLICATION

(11) **EP 1 081 640 A2**
(43) Date of publication of application: **07.03.2001**
(21) Application number: 00118919.0
(22) Date of filing: 01.09.2000
(51) Int. Cl.: G06K 19/06

(54) **Recognition code, particularly for a disk-shaped medium**

(30) Priority: 03.09.1999 IT VI990184
(71) Applicant: Video System Italia S.r.l., 36010 Zane (Vicenza) (IT)
(72) Inventor: Tasello, Stefano, 37029 S. Pietro in Cariano (VR) (DE)
(74) Representative: Forattini, Amelia

(57) **Abstract**

A recognition code, particularly for a disk-like medium for multimedia applications, which includes a self-adhesive annular label to be associated with at least one of the faces of the medium at the annular portion that surrounds its central hole; its particularity consists of the fact that it includes identification printing which is applied on the exposed side of the label and can be interpreted in all directions by a unidirectional fixed optical reader. The invention fully solves the problems observed in conventional bar codes, since it allows to have a multiple-digit representation in a very small space.

## Description

The present invention relates to a recognition code, for a disk-shaped medium for multimedia applications, particularly, but not exclusively, useful in automatic dispensers for the rental and sale of videocassettes, compact discs, video games, DVDs, et cetera.

It is known that identification labels, adapted to be interpreted by optical readers, are associated with the media stored in the magazines of the automatic dispensers. The identification labels are substantially constituted by unidirectional bar codes printed on strips of self-adhesive paper, which are applied to the containers of the media or to the surface of the media themselves. For example, in the case of videocassettes, the labels are arranged along the sides. In the case of compact discs, and in general of thin media, this solution cannot be adopted because of the rather limited thickness. Italian Patent No. 1259828 discloses an identification element which solves this problem. In detail, this element consists of a self-adhesive annular label which can be associated with one of the faces of the compact disc, at the annular region that surrounds its central hole, and on which a plurality of substantially radial bars are printed. In turn, an optical reader is provided which can interpret the combination of the bars and is rigidly coupled to a platform which can rotate about the axis that is perpendicular to the plane of the compact disc and lies above the compact disc conveyor means, which connects the magazines to the dispensing and return slots.

A first drawback of this last solution consists of the fact that the optical reader must be able to rotate in order to read the radial bar code. This of course entails the production of a special apparatus thus raising the manufacturing cost of the automatic dispenser.

A second drawback is that, with this code system, in order to be able to store a larger amount of data it is necessary, beyond a certain limit, to increase the printing resolution and at the same time resort to more sophisticated readers. Clearly, all this has a further negative effect on the manufacturing and sale costs of these dispensers.

The aim of the present invention is to overcome the drawbacks noted above in conventional types of identification code for videocassettes and particularly for compact discs, providing a recognition code, particularly for a disk-like medium for multimedia applications, which allows to have a multiple-digit representation in a smaller space than conventional bar codes.

An object of the invention is to provide a code which represents a large number of data with respect to the available space which can be interpreted by a conventional optical reader.

Another object of the invention is to provide a code which can be read by the optical reader regardless of the angular orientation of the medium on its plane with respect to the reader.

Another object of the invention is to provide a code which entails low printing and reading costs.

This aim, these objects and others which will become better apparent hereinafter are achieved by a recognition code, particularly for a disk-like medium for multimedia applications, which includes a self-adhesive annular label to be associated with at least one of the faces of the medium at the annular portion that surrounds its central hole, characterized in that it comprises an identification printing which is applied on the exposed side of the label and can be interpreted in all directions by a unidirectional fixed optical reader.

Further characteristics and advantages of the invention will become better apparent from the following detailed description of a preferred but not exclusive embodiment thereof, illustrated only by way of non-limitative example in the accompanying drawings, wherein:
Figure 1 is a top view of a disk-like medium for multimedia applications, namely a compact disc bearing the recognition code according to the invention;
Figure 2 is a perspective view of the medium of Figure 1 and of an optical reader during the reading of the recognition code.

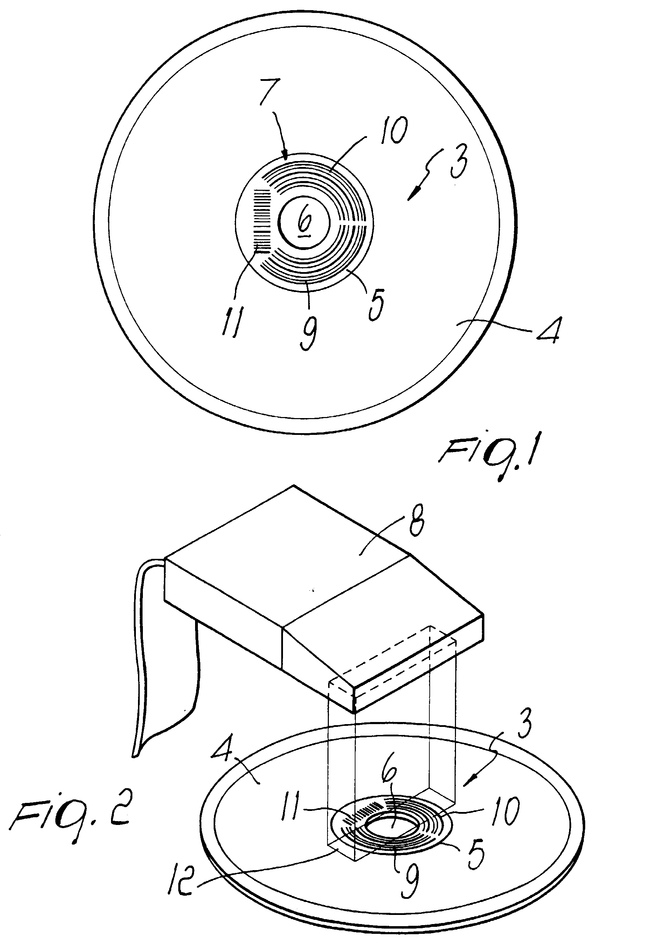

With reference to the accompanying figures and initially to Figure 1, the recognition code, generally designated by the reference numeral 3, is applied to a disk-like medium for multimedia applications, more specifically a compact disc, which is generally designated by the reference numeral 4. According to the prior art, the code 3 includes an annular label 5 which is applied to one of the faces of the medium at the non-recorded annular portion that surrounds a central hole 6. Indicatively, the label 5 covers all of the annular portion. The particularity of the code is that, on the exposed side of the label 5, there is identification printing, generally designated by the reference numeral 7, which can be interpreted in all directions by a fixed unidirectional optical reader 8. In greater detail, the identification printing 7 is constituted by two annular arcs, designated by the reference numerals 9 and 10 respectively, which can be interpreted by the optical reader 8, and by a conventional unidirectional bar code 11 which can be interpreted by means of a conventional optical reader of the gun-shaped type (not shown), which is typically used in video rental stores. In turn, the annular arcs 9 and 10 are each formed by a band of circular arc-like bars of different thickness and with appropriate spacings. Substantially, in this case, the bands of bars, each of which represents a four-character code, are interpreted by the reader 8 and by the software associated therewith as a single six-character code, in which the first and last characters are alphanumeric. Clearly, the optical reader 8 is capable of interpreting the code 7 regardless of its angular orientation on the plane of the medium 4 by virtue of the circular shape of the code 3. The reader in fact interprets the portions of the bands of bars that fall within the reading projection 12 as a unidirectional bar code, since it interprets those portions as approximately linear bars.

In practice it has been observed that the described code achieves the intended aim and objects, allowing to have a multiple-digit code in a very small space which can still be interpreted by a conventional optical reader.

The code according to the invention is susceptible of numerous modifications and variations, all of which are within the scope of the same inventive concept expressed herein.

All the details may furthermore be replaced with other technically equivalent elements.

In practice, the materials used, as well as the contingent shapes and dimensions, may be any according to requirements.

## Claims

1. A recognition code, particularly for a disk-like medium for multimedia applications, comprising a self-adhesive annular label to be associated with at least one of the faces of said medium at the annular portion that surrounds its central hole, characterized in that it comprises identification printing which is applied on the exposed side of said label and can be interpreted in all directions by a unidirectional fixed optical reader.

2. The code according to claim 1, characterized in that said identification printing comprises at least one pair of annular arcs.

3. The code according to one or more of the preceding claims, characterized in that said annular arcs each comprise a band of bars shaped like circular arcs.

4. The code according to one or more of the preceding claims, characterized in that said bands of bars each represent a plurality of characters which the software associated with said reader interprets as a single alphanumeric code.
